# EUROPÄISCHE PATENTSCHRIFT

(11) **EP 0 445 410 B1**
(45) Veröffentlichungstag und Bekanntmachung des Hinweises auf die Patenterteilung: **26.10.1994**
(21) Anmeldenummer: 90124856.7
(22) Anmeldetag: 20.12.1990
(51) Int. Cl.: C09B 62/22, D06P 1/382

(54) **Reaktivfarbstoffe**
Reactive dyes
Colorants réactifs

(30) Priorität: 03.03.1990 DE 4006792
(43) Veröffentlichungstag der Anmeldung: 11.09.1991
(73) Patentinhaber: BAYER AG, 51368 Leverkusen (DE)
(72) Erfinder: Harms, Wolfgang, Dr., W-5068 Odenthal (DE); Stöhr, Frank-Michael, Dr., W-5068 Odenthal (DE); Schündehütte, Karl-Heinz, Prof. Dr., W-5090 Leverkusen 3 (DE)

(56) Entgegenhaltungen:
- FR-A- 1 570 565
- FR-A- 2 384 002

## Beschreibung

Aus FR-A-1 570 565 und DE-A-3 426 008 sind bereits verschiedene Pyrimidin-gruppenhaltige Antrachinonfarbstoffe bekannt.

In FR-A-2 384 002 sind Anthrachinonfarbstoffe beschrieben, die Trihalogenpyrimidingruppen als Reaktivkomponenten enthalten.

Gegenstand der vorliegenden Erfindung sind Farbstoffe der Formel 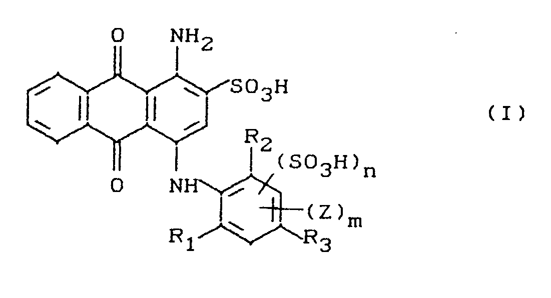
worin
- Z: = 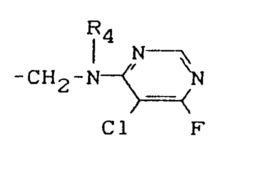
- R₁: = C₁-C₂-Alkyl, SO₃H
- R₂: = C₁-C₂-Alkyl, Z
- R₃: = H, C₁-C₄-Alkyl, SO₃H
- R₄: = H, gegebenenfalls substituiertes C₁-C₄-Alkyl
- m: = 0 oder 1
- n: = 0 oder 1
mit der Maßgabe, daß m = 0, wenn R₂ = Z und n = 0, wenn R₁ und/oder R₃ = SO₃H.

Geeignete Alkylreste R₃ sind beispielsweise Methyl, Ethyl, 1-Propyl, 2-Propyl, 1-Butyl, 2-Butyl, tert.-Butyl.

Geeignete Alkylreste R₄ sind beispielsweise gegebenenfalls durch OH, Sulfo, Sulfato, Cyan oder Chlor substituierte C₁-C₄-Alkylreste wie Methyl, Ethyl, Propyl, Butyl, 2-Hydroxyethyl, 2-Sulfatoethyl, Carboxymethyl, 2-Carboxyethyl, 2-Sulfoethyl, 2-Cyanoethyl, 2-Chlorethyl.

Bevorzugte Farbstoffe I sind solche der Formel 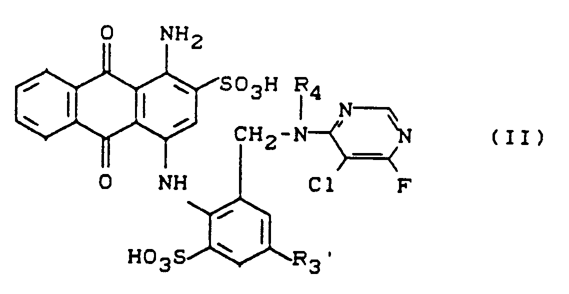
worin
- R₃': = C₁-C₄-Alkyl
sowie solche der Formeln 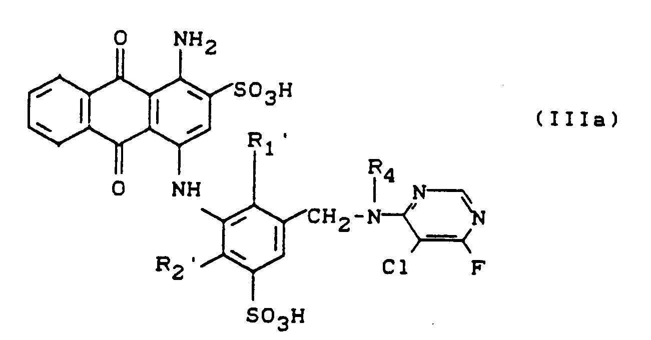
und 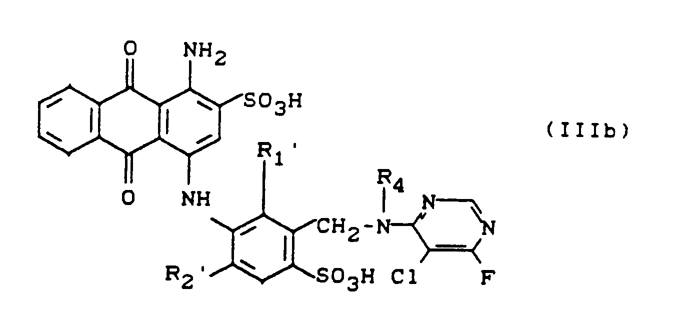
sowie solche der Formel 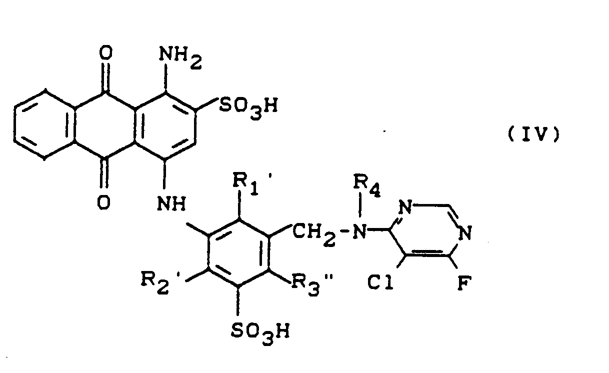
wobei
- R₁' und R₂': = C₁-C₂-Alkyl
und
- R₃'': = C₁-C₂-Alkyl.

Besonders bevorzugte Farbstoffe sind Farbstoffe dar Formeln II-IV, in denen R₄ = H oder CH₃ ist.

Ganz besonders bevorzugt ist der Farbstoff der Formel 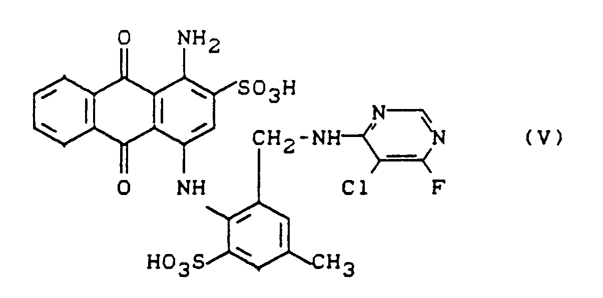
Die Herstellung der Farbstoffe der Formel I erfolgt durch Kondensation von Verbindungen der Formel 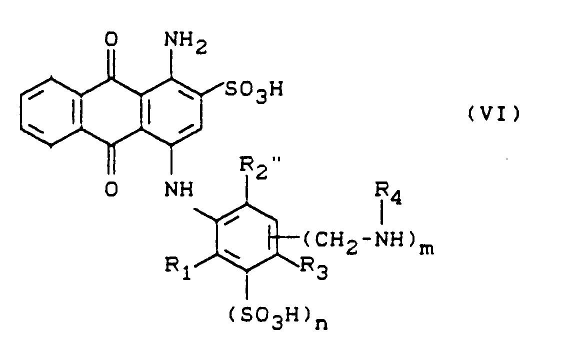
worin
R₁, R₃, R₄, m und n die oben angegebene Bedeutung haben und
- R₂'': = C₁-C₂-Alkyl oder im Falle von m = 0

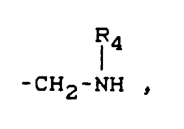

mit 5-Chlor-4,6-difluorpyrimidin (VII).

Die Kondensationen von (VI) mit (VII) werden im wäßrigem oder wäßrig-organischem Medium bei Temperaturen zwischen 0 und 80°, vorzugweise 20-50°, und bei pH-Werten zwischen 3 und 10, vorzugsweise 5-9, in Gegenwart basischer Verbindungen wie wäßrigen Alkalihydroxid-, Alkalicarbonat-, Alkalihydrogencarbonat- oder Alkaliphosphatlösungen oder organischer tertiärer Basen wie Trialkylaminen, Diazabicyclo-octan oder Pyridin durchgeführt. Bei Arbeiten in wäßrig-organischem Medium werden als organische Komponenten vorzugsweise apolar aprotische Lösungsmittel wie Dimethylformamid, N-Methylpyrrolidon, Dimethylacetamid oder Caprolactam oder als protische Lösungsmittel auch Glykole, Glykolether oder Polyglykolether eingesetzt.

Die Verbindungen VI sind bekannt. Sie können beispielsweise folgendermaßen hergestellt werden:

Entweder führt man in beliebiger Reihenfolge in entsprechend substituierte 1-Amino-4-(alkyl-arylamino)-anthrachinon-2-sulfonsäuren eine Sulfogruppe und die Funktion -CH₂-NH-R₄ durch Einhornkondensation mit N-(Hydroxymethyl)-carbonsäureamiden oder -N-alkylamiden oder -N-(Hydroxymethyl)-urethanen und anschließende Verseifung ein, oder man kondensiert 1-Amino-2-sulfo-4-bromanthrachinon mit entsprechend substituierten Aminobenzylaminen, N-(Aminobenzyl)-carbonamiden, N-(Aminobenzyl)-urethanen und sulfiert bzw. sulfiert und verseift gegebenenfalls in beliebiger Reihenfolge.

Die neuen Farbstoffe eignen sich zum Färben und Bedrucken von hydroxylhaltigen und N-haltigen Textilmaterialien, von nativer und regenerierter Cellulose sowie von Wolle, Seide, synthetischen Polyamiden und Polyurethanen.

Die in der Beschreibung angegebenen Formeln sind die der freien Säuren. Für die Färbungen werden im allgemeinen die Salze dieser Säuren, insbesondere die Alkalisalze, vorzugsweise die Natrium-, Kalium- oder Lithiumsalze eingesetzt. In den Beispielen sind die Temperaturen in °C angegeben.

### Beispiel 1

30 g 1-Amino-4-(2'-aminomethyl)-4'-methyl-phenylamino)-anthrachinon-2,6'-disulfonsäure werden bei 25°-30° in 300 ml Wasser suspendiert und durch Zusatz von etwa 30 ml 2n NaOH bei pH 7 gelöst. Man läßt nun 10,5 g bei 50° geschmolzenes 5-Chlor-4,6-difluorpyrimidin in ca. 30 Minuten zutropfen und hält den pH-Wert durch Zutropfen von 2n Natronlauge weiter auf 6,5-7,0. Der pH-Wert und die oben angegebene Temperatur werden noch mehrere Stunden gehalten, bis der Natronlaugeverbrauch völlig zum Stillstand gekommen und das Anthrachinon-Edukt laut chromatographischer Kontrolle ganz in das Kondensationsprodukt verwandelt ist.

Die erhaltene Farbstofflösung wird bei 50° mit Natriumchlorid ausgesalzen, das ausgefallene Produkt abgesaugt und mit 25 %iger Natriumchloridlösung gewaschen. Man trocknet den Farbstoff bei 50° im Vakuum. Er entspricht der Formel 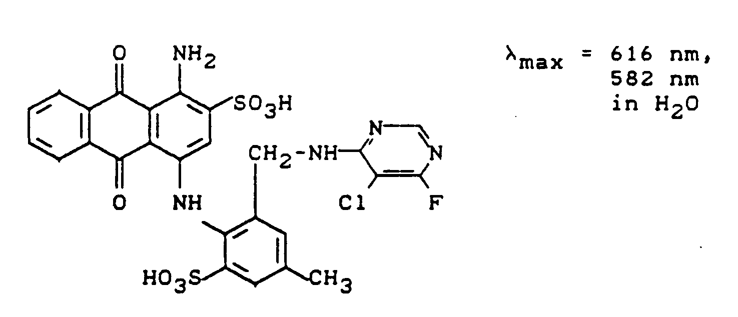
Auf Baumwolle liefert der Farbstoff nach den für die Reaktivfarbstoffe üblichen Applikations-Techniken im Druck und im Klotz-Verfahren brillante rotstichig blaue Färbungen mit sehr guten Licht- und Naßechtheiten, mit hoher Beständigkeit sowohl gegen saure Hydrolyse als auch gegen oxydatives Splittung der Faser-Farbstoff-Bindung.

### Beispiel 2

30,0 g 1-Amino-4-(2',6'-dimethyl-3'-methylaminomethylphenylamino)-anthrachinon-2,4'- und -2,5'-disulfonsäure-Isomeren-Gemisch werden in 210 ml Wasser durch Zugabe von ca. 55 ml 2n Natronlauge bei pH = 7 und 45° gelöst. Man kühlt die Lösung auf 25° ab und läßt in 15 Minuten 9,9 g 5-Chlor-4,6-difluorpyrimidin in geschmolzener Form zutropfen. Während des Eintropfens und später hält man den pH-Wert auf 6,5-7,0 und die Temperatur auf 25-30°. Man rührt den Ansatz unter den genannten Bedingungen nach, bis der Natronlaugeverbrauch beendet ist. Die erhaltene Farbstofflösung läßt man in eine Suspension von 70 g Natriumchlorid in 300 ml 25 %iger Natriumchloridlösung einlaufen, rührt einige Stunden nach, saugt den ausgefällten Farbstoff ab, wäscht ihn mit Natriumchloridlösung und trocknet ihn bei 50° im Vakuum. Er entspricht der Formel 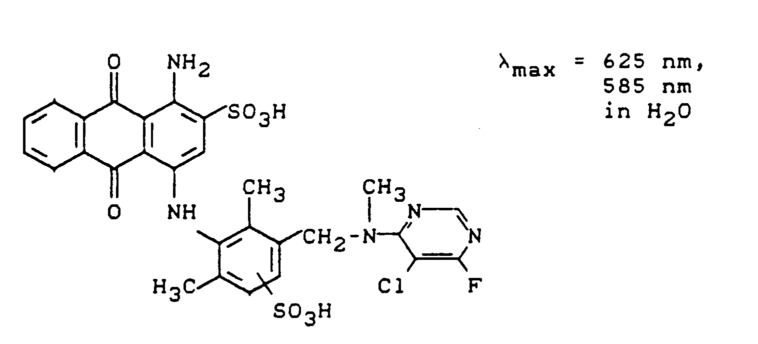
Auf Baumwolle liefert der Farbstoff nach den für Reaktivfarbstoffe bekannten Druck- und Färbeverfahren brillante rotstichig-blaue Färbungen mit sehr guten Licht- und Naßechtheiten insbesondere mit hoher Beständigkeit gegen saure Hydrolyse und oxydative Einflüsse wie Chlor oder Perborat.

Weitere Farbstoffe der allgemeinen Formel I, die auf Baumwolle brillante rotstichig-blaue Färbungen mit ähnlichen Echtheitseigenschaften ergeben, erhält man, wenn man (VII) mit folgenden Anthrachinon-Farbkörpern umsetzt:

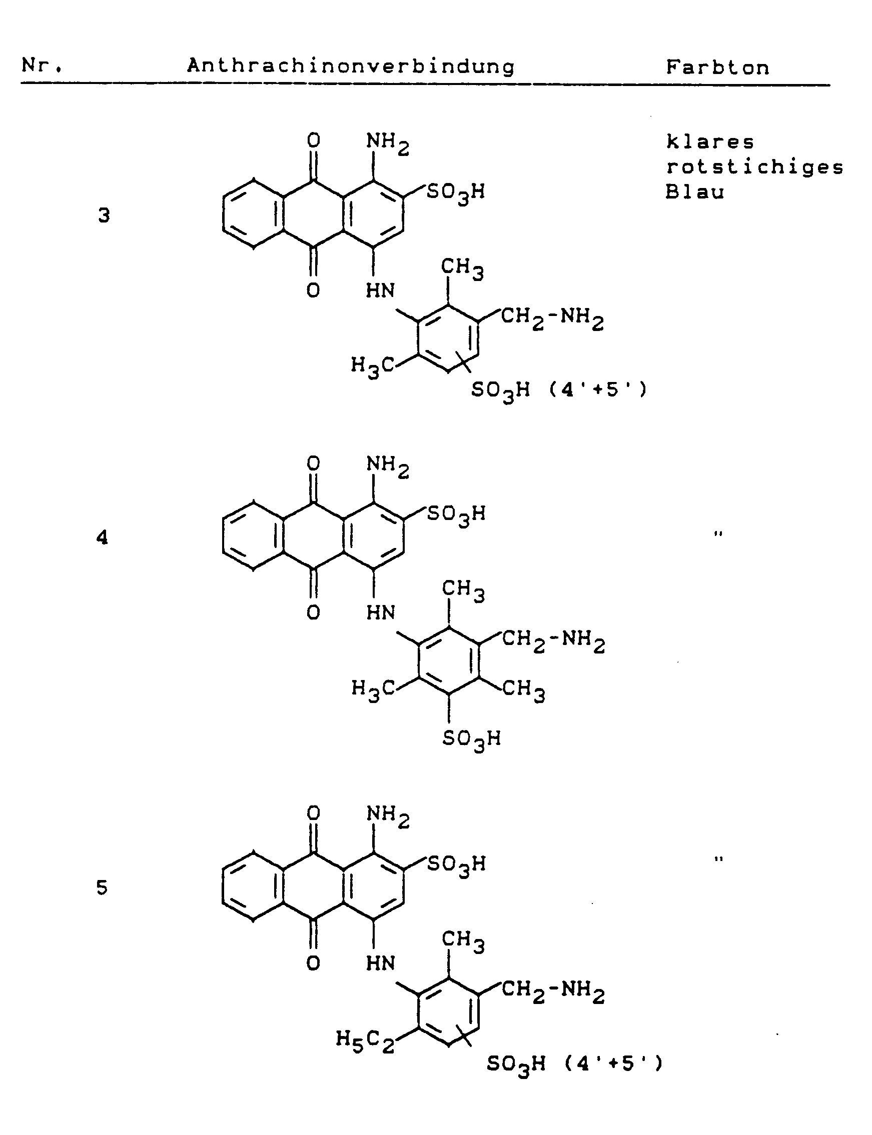

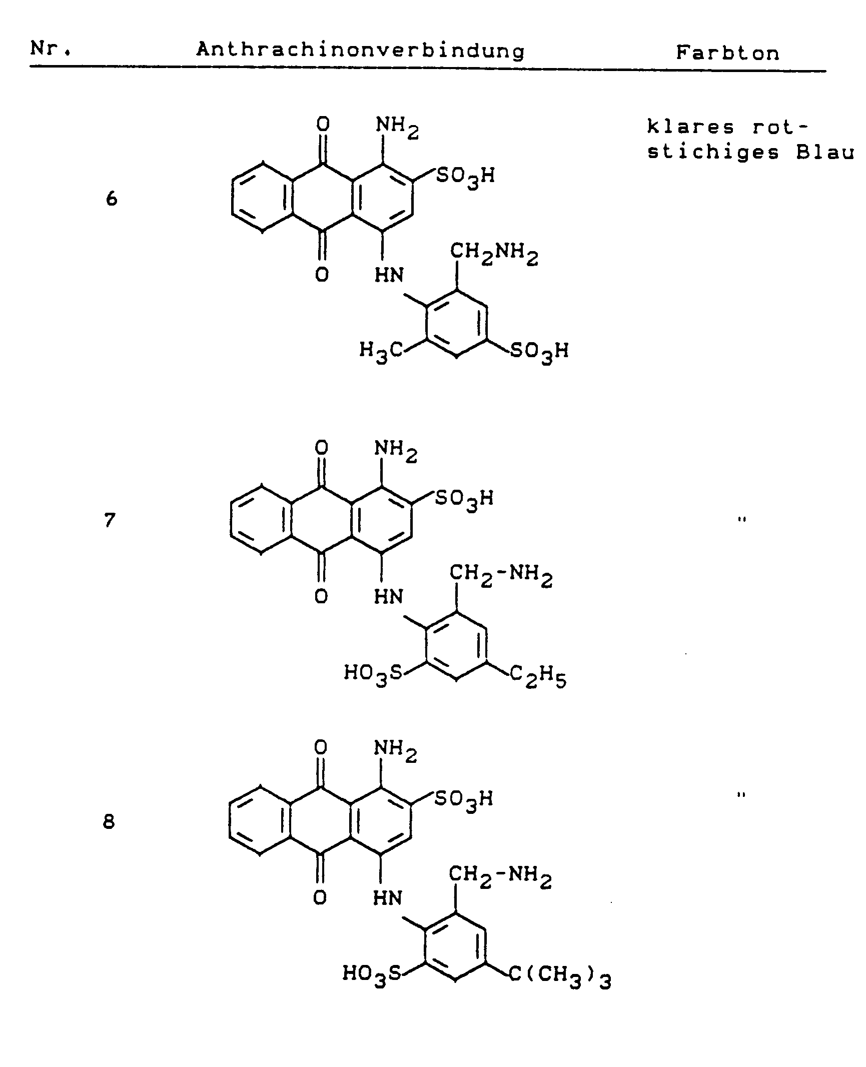

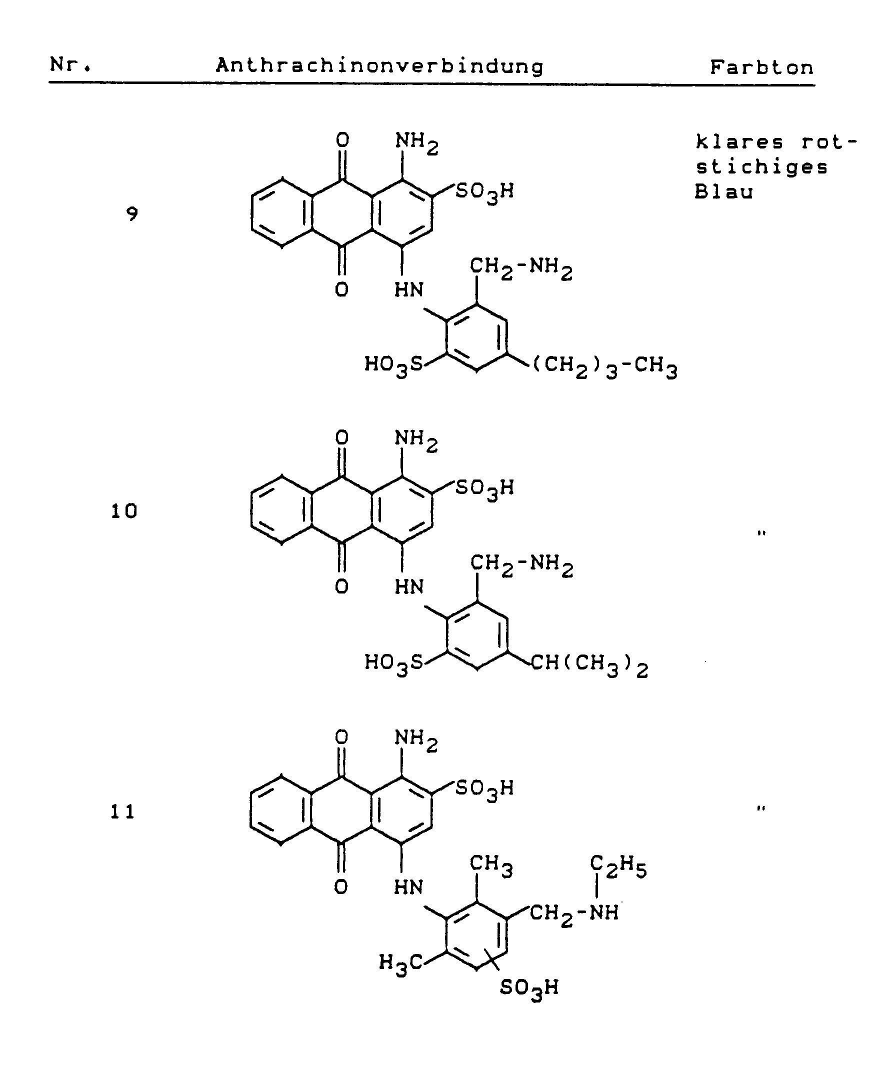

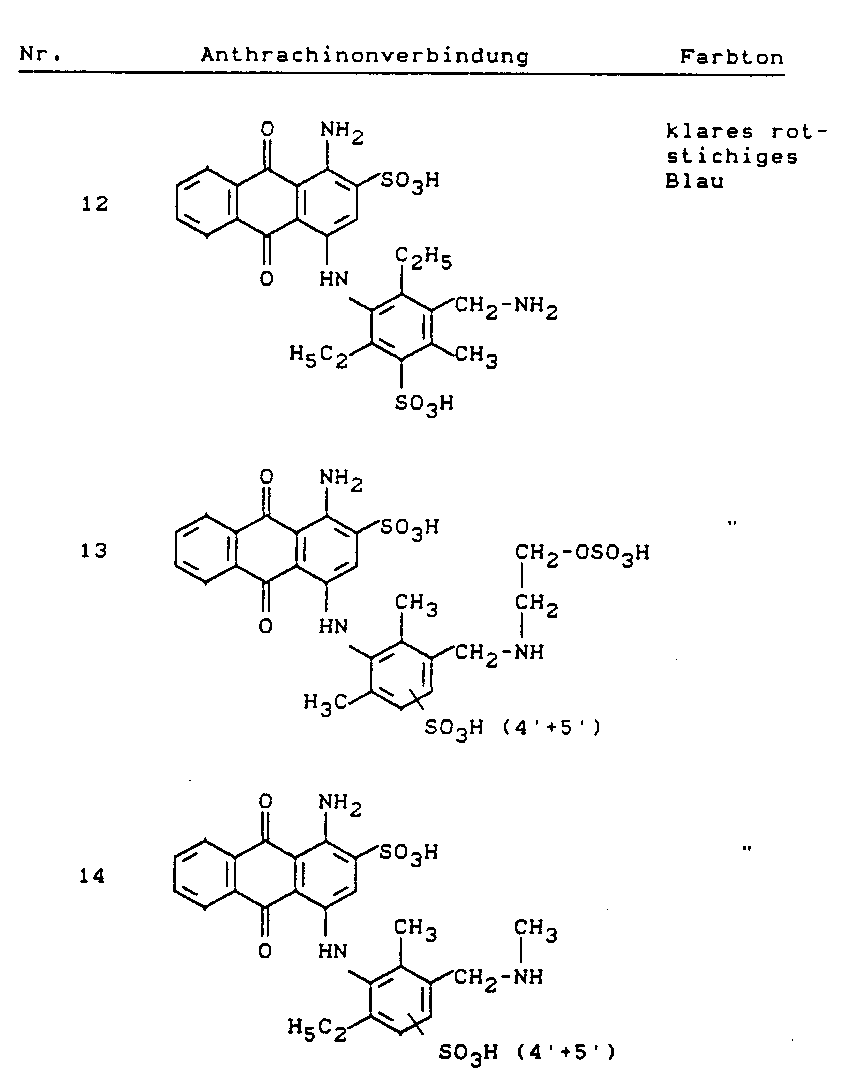

## Patentansprüche

1. Farbstoffe der Formel 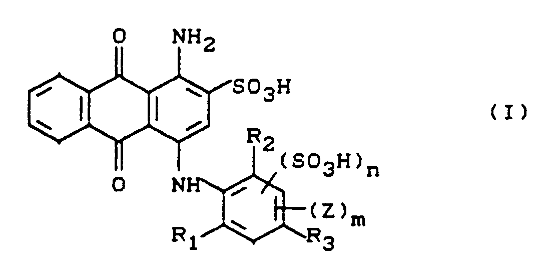 worin
Z = 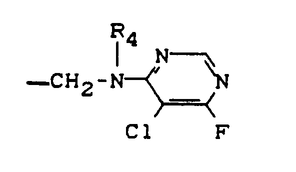
R₁ = C₁-C₂-Alkyl, SO₃H
R₂ = C₁-C₂-Alkyl, Z
R₃ = H, C₁-C₄-Alkyl, SO₃H
R₄ = H, gegebenenfalls substituiertes C₁-C₄-Alkyl
m = 0 oder 1
n = 0 oder 1
mit der Maßgabe, daß m = 0, wenn R₂ = Z und n = 0, wenn R₁ und/oder R₃ = SO₃H.

2. Farbstoffe des Anspruchs 1 der Formel 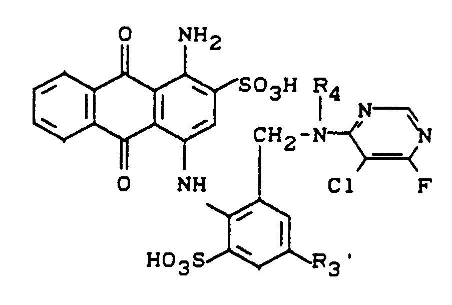 mit
R₃' =C ₁-C₄-Alkyl.

3. Farbstoffe des Anspruchs 1 der Formeln 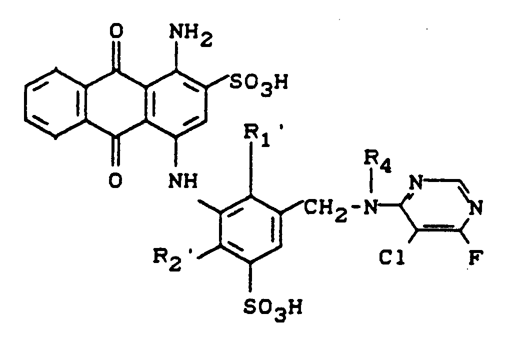 und 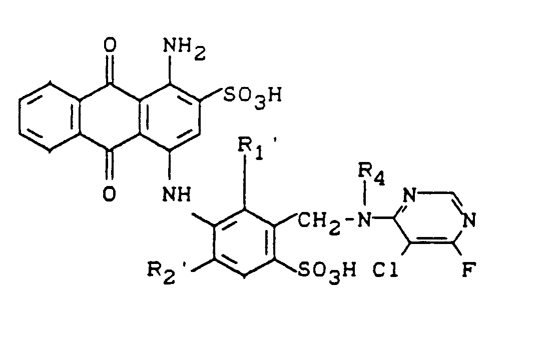 mit
R₁', R₂' = C₁-C₂-Alkyl.

4. Farbstoffe des Anspruchs 1 der Formel 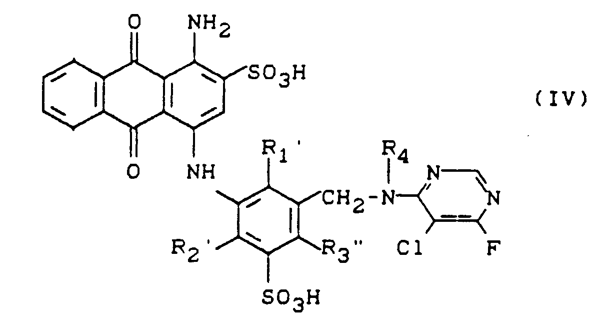 worin
R₃'' = C₁-C₂-Alkyl und R₁', R₂' die in Anspruch 3 angegebene Bedeutung haben.

5. Farbstoffe der Ansprüche 2-4 mit R₄ = H oder CH₃.

6. Farbstoff der Formel

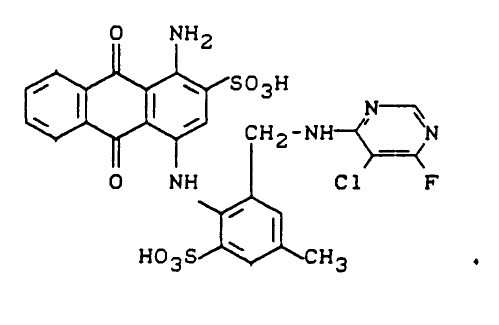

## Claims

1. Dyestuffs of the formula 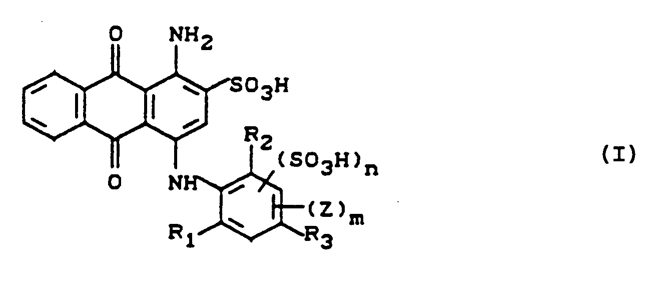 in which
Z = 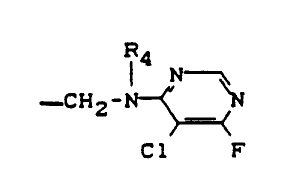
R₁ = C₁-C₂-alkyl, SO₃H
R₂ = C₁-C₂-alkyl, Z
R₃ = H, C₁-C₄-alkyl, SO₃H
R₄ = H, substituted or unsubstituted C₁-C₄-alkyl
m = 0 or 1
n = 0 or 1
with the proviso that m = 0 when R₂ = Z and n = 0 when R₁ and/or R₃ = SO₃H.

2. Dyestuffs of Claim 1 of the formula 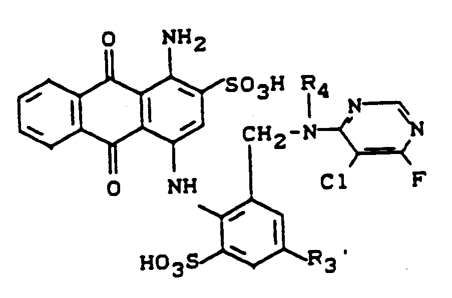 where
R₃' = C₁-C₄-alkyl.

3. Dyestuffs of Claim 1 of the formulae 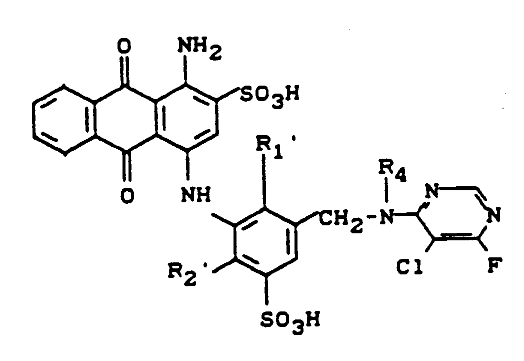 and 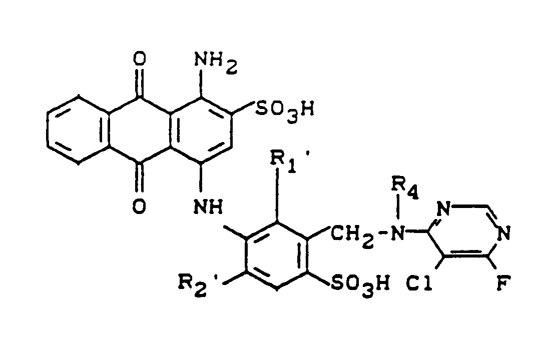 where
R₁', R₂' = C₁-C₂-alkyl.

4. Dyestuffs of Claim 1 of the formula 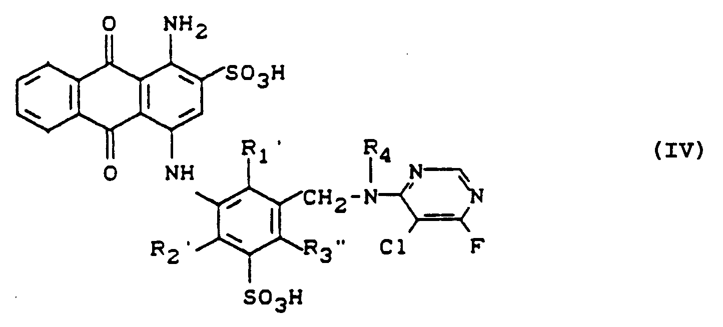 in which
R₃'' = C₁-C₂-alkyl and R₁', R₂' have the meaning given in Claim 3.

5. Dyestuffs of Claims 2-4 where R₄ = H or CH₃.

6. Dyestuff of the formula

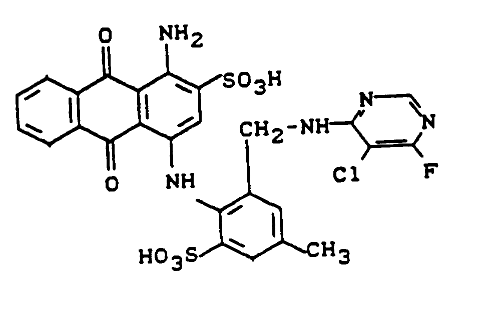

## Revendications

1. Colorants de formule : 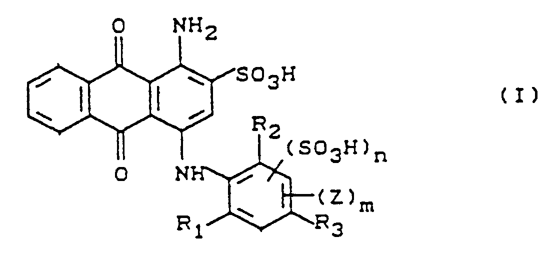 dans laquelle
Z = 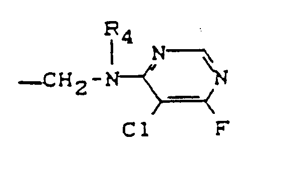
R₁ = alkyle C₁-C₂, SO₃H,
R₂ = alkyle C₁-C₂, Z
R₃ = H, alkyle C₁-C₄, SO₃H
R₄ = H, alkyle C₁-C₄ le cas échéant substitué,
m = 0 ou 1,
n = 0 ou 1,
à la condition que m = 0, quand R₂ = Z et n = 0, quand R₁ et/ou R₃ = SO₃H.

2. Colorants de la revendication 1 de formule : 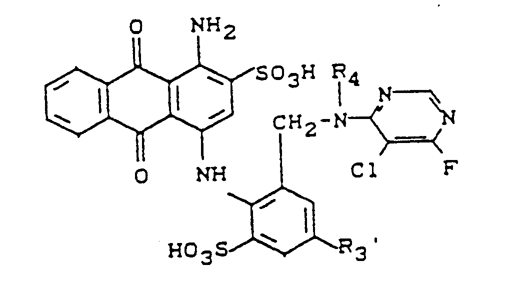 avec
R'₃ = alkyle C₁-C₄.

3. Colorants de la revendication 1 de formules : 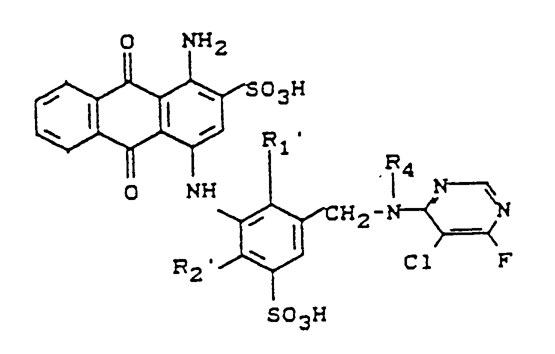 et 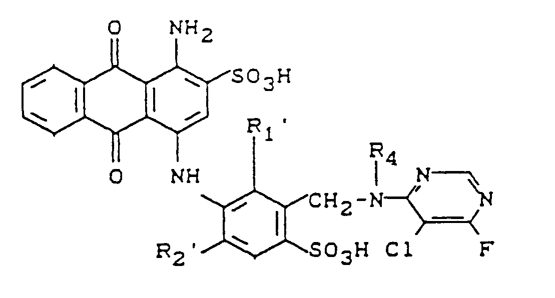 avec
R'₁, R'₂ = alkyle C₁-C₂.

4. Colorants de la revendication 1 de formule : 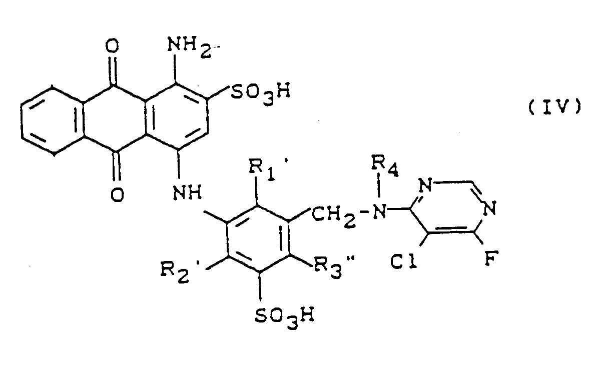 dans laquelle
R''₃ = alkyle C₁-C₂ et R'₁, R'₂ ont la signification donnée à la revendication 3.

5. Colorants des revendications 2-4 avec R₄ = H ou CH₃.

6. Colorant de formule :
